(19) Europäisches Patentamt / European Patent Office / Office européen des brevets

(11) **EP 3 189 348 B1**

(12) **FASCICULE DE BREVET EUROPEEN**

(45) Date de publication et mention
de la délivrance du brevet:
**01.01.2020 Bulletin 2020/01**

(51) Int Cl.:
***G01S 17/66*** *(2006.01)*    ***G01S 15/66*** *(2006.01)*
***G01S 13/72*** *(2006.01)*

(21) Numéro de dépôt: **15760148.5**

(22) Date de dépôt: **04.09.2015**

(86) Numéro de dépôt international:
**PCT/EP2015/070210**

(87) Numéro de publication internationale:
**WO 2016/034695 (10.03.2016 Gazette 2016/10)**

(54) **PROCEDE DE GESTION DE CROISEMENTS DANS LE SUIVI D'OBJETS MOBILES ET DISPOSITIF ASSOCIE**

VERFAHREN ZUR VERWALTUNG VON ÜBERGÄNGEN BEI DER VERFOLGUNG VON BEWEGLICHEN OBJEKTEN UND ZUGEHÖRIGE VORRICHTUNG

METHOD FOR MANAGING CROSSOVERS IN THE TRACKING OF MOBILE OBJECTS, AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2014 FR 1401991**

(43) Date de publication de la demande:
**12.07.2017 Bulletin 2017/28**

(73) Titulaire: **Thales**
**92400 Courbevoie (FR)**

(72) Inventeurs:
• **LEMOINE, Jean-Marie**
**78851 Elancourt Cedex (FR)**
• **DELABBAYE, Jean-Yves**
**78851 Elancourt Cedex (FR)**
• **JOUSSELIN, Claude**
**78851 Elancourt Cedex (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 533 628    US-A- 6 081 764**

• **EDSON HIROSHI AOKI ET AL: "The Rao-Blackwellized marginal M-SMC filter for Bayesian multi-target tracking and labelling", INFORMATION FUSION (FUSION), 2012 15TH INTERNATIONAL CONFERENCE ON, IEEE, 9 juillet 2012 (2012-07-09), pages 90-97, XP032228407, ISBN: 978-1-4673-0417-7**
• **BLOM H A P ET AL: "Tracking closely spaced targets: Bayes outperformed by an approximation?", INFORMATION FUSION, 2008 11TH INTERNATIONAL CONFERENCE ON, IEEE, PISCATAWAY, NJ, USA, 30 juin 2008 (2008-06-30), pages 1-8, XP031931852, ISBN: 978-3-8007-3092-6**
• **GAVRILOAIA G ET AL: "An Ad-Hoc Method for Avoiding Tracks Coalescence in Pdaf for Tracks Fusion", TELECOMMUNICATIONS IN MODERN SATELLITE, CABLE AND BROADCASTING SERVICE S, 2005. 7TH INTERNATIONAL CONFERENCE ON NIS, SERBIA AND MONTENEGRO 28-30 SEPT. 2005, PISCATAWAY, NJ, USA, IEEE, vol. 2, 28 septembre 2005 (2005-09-28), pages 579-582, XP010874693, DOI: 10.1109/TELSKS.2005.1572180 ISBN: 978-0-7803-9164-2**
• **HUGH L KENNEDY: "Controlling track coalescence with scaled Joint Probabilistic Data Association", RADAR, 2008 INTERNATIONAL CONFERENCE ON, IEEE, PISCATAWAY, NJ, USA, 2 septembre 2008 (2008-09-02), pages 440-445, XP031350497, ISBN: 978-1-4244-2321-7**

- **MATS EKMAN ET AL: "Particle filters for tracking closely spaced targets", INFORMATION FUSION, 2007 10TH INTERNATIONAL CONFERENCE ON, IEEE, PI, 1 juillet 2007 (2007-07-01), pages 1-8, XP031193877, ISBN: 978-0-662-45804-3**
- **DAUM F: "Multitarget-Multisensor Tracking: Principles and Techniques [Book Review]", IEEE AEROSPACE AND ELECTRONIC SYSTEMS MAGAZINE, IEEE SERVICE CENTER, PISCATAWAY, NJ, US, vol. 11, no. 2, 1 février 1996 (1996-02-01), page 41, XP011393877, ISSN: 0885-8985, DOI: 10.1109/MAES.1996.484305 cité dans la demande**
- **BLACKMAN S S: "Multiple hypothesis tracking for multiple target tracking", IEEE AEROSPACE AND ELECTRONIC SYSTEMS MAGAZINE, IEEE SERVICE CENTER, PISCATAWAY, NJ, US, vol. 19, no. 1, 1 janvier 2004 (2004-01-01), pages 5-18, XP011244428, ISSN: 0885-8985 cité dans la demande**

**Description**

La présente invention concerne le domaine du suivi d'objets mobiles. La présente invention concerne plus particulièrement un procédé de gestion de croisements dans le suivi d'objets mobiles ainsi qu'un dispositif adapté pour mettre en œuvre un tel procédé. Le procédé et le dispositif peuvent s'appliquer notamment au suivi d'aéronefs et de navires.

Le suivi d'un ensemble d'objets mobiles par un ou plusieurs capteurs consiste à exploiter au cours du temps les données en sortie du groupe d'au moins un capteur pour construire et mettre à jour un ensemble de pistes correspondant aux différents objets perçus par le ou les capteurs. Il s'agit de regrouper au fil du temps les mesures faites sur les différents objets suivis de façon à avoir des regroupements homogènes, chaque regroupement devant correspondre à un objet différent, et chaque regroupement constituant une piste suivant le même objet au fil du temps. Les objets à suivre ainsi que le ou les capteurs peuvent être en mouvement.

Les données correspondant aux différents objets mobiles présents dans l'environnement surveillé par le ou les capteurs peuvent par exemple comporter des informations de positionnement desdits objets. Selon le capteur, les données peuvent être des valeurs mesurées, comme par exemple un azimut dans le cas d'un capteur MRE pour " *Mesure de Renseignement Electronique"* également connu sous le sigle anglo saxon ESM pour " *Electronic Support Measures",* ou des vecteurs de mesures comme par exemple des vecteurs constitués d'un azimut et d'une distance dans le cas d'un capteur radar, ou des vecteurs constitués d'un azimut et d'un site dans le cas d'un capteur optronique. Les vecteurs de données peuvent également contenir des mesures caractéristiques décrivant les objets. Dans certains cas, les informations de positionnement peuvent être constituées d'une position datée du capteur et d'un ou plusieurs paramètres de situation de l'objet dans l'espace relativement au capteur.

Un problème, dans le domaine du suivi d'objets mobiles, est de suivre correctement l'évolution des différents objets au cours du temps. Lorsque des objets similaires, c'est à dire non discriminables par les mesures effectuées par un ou plusieurs capteurs, évoluent dans l'espace, il se peut qu'ils viennent à se croiser au sens de la perception depuis le porteur du ou des capteurs c'est-à-dire que les mesures de position relative des objets par rapport audit porteur se confondent momentanément. On parle alors d'ambiguïtés. Dans ce cas, il devient difficile, dans une tranche de temps plus ou moins longue, de savoir si les informations produites par le ou les capteurs correspondent à un objet ou à un autre. Un problème qui se pose est de savoir comment regrouper et suivre les mesures lorsque certaines deviennent momentanément ambiguës. Dans ces conditions, lors du traitement des données, il peut se produire des mélanges et une ou plusieurs mesures peuvent être attribuées à de mauvaises pistes. Ceci peut altérer la qualité du suivi des objets et peut provoquer des mauvaises caractérisations, des discontinuités ou des éclatements de pistes au moment du croisement. Dans ce contexte, il est intéressant de proposer une solution permettant d'améliorer le traitement de pistage lors de ces situations de croisement.

Le suivi d'objets est largement traité dans la littérature (voir par exemple Yaakov Bar-Shalom, Xiao-Rong Li - « Estimation and Tracking » - Artech House 1993 ou Samuel Blackman, Robert Popoli - « Design and Analysis of Modern Tracking Systems » - Artech House 1999). Ce suivi consiste à associer l'information nouvellement produite aux pistes déjà produites par le passé en tenant compte de la proximité des valeurs mesurées et des bruits de mesure, et à mettre les pistes à jour.

Le suivi d'objets multiples (ou MTT pour « *Multiple Target Tracking* ») par un capteur est un traitement qui consiste à créer ou mettre à jour des pistes à partir de données nouvellement acquises. Ceci se fait typiquement (voir notamment Samuel Blackman, Robert Popoli - « Design and Analysis of Modern Tracking Systems » - Artech House 1999) par l'enchaînement de cinq fonctions : traitement des nouvelles observations, association des observations aux pistes, gestion des pistes (initialisation, confirmation ou suppression), filtrage et prédiction (pour mettre à jour les pistes et pouvoir estimer des positions dans le futur proche), calcul de fenêtrage (pour permettre des associations dans le futur proche en restreignant les associations possibles par un volume autour de la position prédite).

Il peut parfois y avoir conflit entre plusieurs pistes, par exemple lorsqu'il y a intersection des volumes autour des positions prédites. Dans un traitement de type NN (pour « Nearest Neighbor »), chaque piste est mise à jour par l'observation la plus proche, même si l'observation est compatible de plusieurs pistes. Dans un traitement de type GNN (pour « Global Nearest Neighbor »), l'association est faite en considérant toutes les associations compatibles du fenêtrage, mais sous la contrainte qu'une observation ne peut être associée qu'à au plus une piste.

La mise à jour des paramètres cinématiques des pistes se fait typiquement par filtrage de type Kalman (voir Yaakov Bar-Shalom, Xiao-Rong Li - « Estimation and Tracking » - Artech House 1993) ou par un traitement de type IMM pour « *Interacting Multiple Model* » (voir Yaakov Bar-Shalom, Xiao-Rong Li - « Multitarget-multisensor tracking: Principles and techniques » - 1995 ou Samuel Blackman, Robert Popoli - « Design and Analysis of Modern Tracking Systems » - Artech House 1999), si on souhaite utiliser un ensemble de filtrages de Kalman en parallèle pour pouvoir s'adapter à un changement cinématique. Cependant, S. Blackman note qu'un traitement d'association de type GNN associé à un filtrage de type Kalman ne fonctionne bien que lorsque les objets sont largement espacés (voir notamment Samuel Blackman - « Multiple Hypothesis Tracking For Multiple Target Tracking » - IEEE A&E Systems Magazine, Jan 2004 vol. 19, no.1, Part 2: tutorials, p5-18). Dans les situations de conflit entre pistes, la matrice de covariance du filtrage de Kalman peut être augmentée, mais cela peut conduire à accroître encore les conflits.

Il est également connu dans l'art antérieur, une approche de type JPDA (pour « *Joint Probabilistic Data Association* »), décrite par exemple en 1995 par Yaakov Bar-Shalom et Xiao-Rong Li dans « Multitarget-multisensor tracking: Principles and techniques ». Cette méthode consiste à mettre à jour les pistes avec toutes les observations compatibles du fenêtrage en utilisant une somme pondérée des observations par leur probabilité. L'inconvénient de cette méthode est qu'elle tend à faire agglomérer les pistes qui sont peu espacées.

Une autre façon de gérer les cas de conflits lors des associations, est d'utiliser des techniques de type MHT pour « *Multiple Hypothesis Tracking* » telles qu'introduites par exemple par D. B. Reid dans « An algorithm for tracking multiple targets » - IEEE Transactions on Automatic Control, vol.21, no.1 (Feb. 1976), p101-104. Ce type de traitement consiste, dans les cas d'ambiguïté d'association, à mémoriser et entretenir au fil du temps toute la combinatoire des successions d'association possibles entre observations et pistes. Afin de chercher à ne conserver que les pistes qui persistent au cours du temps, un score peut être défini pour les hypothèses, et seules les meilleures hypothèses sont finalement retenues. Ce score sur les hypothèses peut être défini par un rapport de vraisemblance ou par un logarithme de rapport de vraisemblance entre la vraisemblance qu'il s'agisse d'une piste et la vraisemblance qu'il s'agisse d'une fausse alarme. Ce type de traitement génère une explosion combinatoire qui peut être maitrisée soit par clustering, suppression ou regroupement d'hypothèses, soit en ne retenant que les k meilleures hypothèses. Il est à noter que ces approches utilisent des hypothèses sur les probabilités *a priori* de nombre de cibles ou de taux de fausses alarmes.

Le brevet délivré aux USA sous la référence US 6 081 764 décrit un dispositif destiné à assurer le suivi des cibles de passage dans une zone donnée de l'espace, et eviter les mélanges ("swap") entre les attributs des cibles pistées dans le cas de croisements des pistes des cibles considérées. Le dispositif divulgué considère les pistes par paires et calcule pour chaque paire considérée un chemin de vol composite, ainsi qu'une valeur de polarité, puis utilise conjointement le chemin de vol composite et la valeur de polarité pour résoudre l'ambiguïté pouvant apparaître dans la corrélation des données de piste de chaque cible. Selon l'enseignement du document, la mise en oeuvre de calculs du chemin de vol composite et de valeurs de polarité cible permettant d'augmenter la taille de la zone de poursuite pour éviter des pertes de piste, sans augmenter en contrepartie la probabilité de mélange des attributs cible.

Un but de l'invention est notamment de corriger tout ou partie des inconvénients de l'art antérieur en proposant une solution, alternative aux solutions précédentes, permettant de gérer correctement les ambiguïtés liées aux croisements dans le suivi des objets mobiles à partir du grand nombre de mesures généré par un ou plusieurs capteurs.

A cet effet, l'invention a pour objet un procédé de gestion de croisements de pistes selon la revendication 1.

Selon un mode de mise en œuvre le procédé comprend en outre une étape Etp3 de notification de l'état d'ambiguïté de la piste sous test à l'instant considéré.

Selon l'invention, une piste k est dite non ambiguë à l'instant $t_l$, si elle vérifie, la relation :

$$\sum_{\substack{j=1 \\ j \neq k}}^{K} \hat{q}_{l-1}^{j} \; g\left( \hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right) < \varepsilon . \hat{r}_{l-1}^{k}$$

Où :

K représente le nombre total de pistes crées jusqu'à l'instant l-1,

$\hat{q}_{l-1}^{j}$ représente l'estimé de la proportion de plots classés dans la piste j jusqu'à l'instant l-1,

g(.) représente une densité de probabilité,

$\hat{C}_{l-1}^{j} = \hat{A}_{l-1}^{j} t_{l-1} + \hat{B}_{l-1}^{j}$ représente l'estimé du vecteur position de la piste j à l'instant $t_{l-1}$,

$\hat{A}_{l-1}^{j}$ représente l'estimé de la vitesse de la piste j à l'instant $t_{l-1}$ et $\hat{B}_{l-1}^{j}$ l'estimé du vecteur position de la piste j à l'instant t=0,

$\hat{r}_{l-1}^{k} = \hat{q}_{l-1}^{"k} / c$ où $\hat{q}_{l-1}^{"k}$ représente l'estimé de la proportion des plots $X_n$ classés dans une piste éloignée de la piste k et c l'intégrale du domaine des mesures admissibles.

Alternativement, une piste k est dite non ambiguë à un instant $t_l$ si pour toute piste j≠k elle vérifie la relation :

$$\left\| \hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right) \right\| > S \text{ Où}$$

$\VERT . \VERT$ représente la norme définie pour un vecteur $X=(x_p)$ par $\VERT\!\VERT X \VERT\!\VERT = \sup\left(\dfrac{|x_p|}{\sigma_p}\right)$ avec $\sigma_p$ l'écart-type pour la $p^{ième}$ composante de X dans la densité g(X),

S représente un seuil prédéterminé.

Selon un mode de mise en œuvre, l'étape de traitement spécifique des estimés des pistes en état d'ambiguïté à un instant $t_l$ est effectuée par un filtre récursif défini par :

$$\begin{cases} \hat{C}_l^k = \hat{C}_{l-1}^k + \hat{A}_{l-1}^k (t_l - t_{l-1}) + \hat{\alpha}_{l-1}^k \mathrm{M}_1 \ g'\left(X_l - \hat{C}_{l-1}^k - \hat{A}_{l-1}^k (t_l - t_{l-1})\right) \\[2mm] \hat{A}_l^k = \hat{A}_{l-1}^k + \hat{\alpha}_{l-1}^k \ \mathrm{M}_2 \ g'\left(X_l - \hat{C}_{l-1}^k - \hat{A}_{l-1}^k (t_l - t_{l-1})\right) \end{cases}$$

Où

$X_l$ représente le plot mesuré à l'instant $t_l$

$\hat{C}_l^k = \hat{A}_l^k t_l + \hat{B}_l^k$ représente l'estimé de la piste considérée à l'instant $t_l$,

$\hat{\alpha}_{l-1}^k$ représente un paramètre de pondération $\mathrm{M}_1$ et $\mathrm{M}_2$ représentent des gains matriciels assurant la stabilité du filtre

$g'(X)$ représente le gradient de la densité de probabilité $g(.)$.

Selon un mode de mise en œuvre, le paramètre $\hat{\alpha}_{l-1}^k$ est défini par

$$\hat{\alpha}_{l-1}^k = \frac{\hat{r}_{l-1}^k}{\hat{r}_{l-1}^k + \displaystyle\sum_{\substack{j=1 \\ j \neq k}}^{K} \hat{q}_{l-1}^j \ g\left(X_l - \hat{C}_{l-1}^j - \hat{A}_{l-1}^j (t_l - t_{l-1})\right)}$$

Où

$\hat{r}_{l-1}^k = \hat{q}_{l-1}^{"k} / c$ .

$\hat{q}_{l-1}^j$ représente la proportion des plots $X_n$ classés dans la piste j à l'instant l-1,

$\hat{C}_{l-1}^j$ représente l'estimé de la piste considérée,

$\hat{A}_{l-1}^j$ représente l'estimé de la vitesse de la piste considérée

Selon un mode de mise en œuvre, le paramètre $\hat{\alpha}_{l-1}^k$ est égal à 0 lorsque la piste est ambiguë et est égal à 1 dans le cas contraire.

Selon un mode de mise en œuvre, si la durée pendant laquelle une piste est considérée comme ambiguë est supérieure à un seuil prédéterminé, ladite piste est considérée comme non ambiguë.

Selon un mode de mise en œuvre, le groupe d'au moins un capteur est choisi parmi des capteurs passifs, des capteurs radar, des capteurs sonar, des capteurs optroniques ou toutes combinaisons de ces capteurs.

L'invention a également pour objet un dispositif de suivi d'objets mobiles selon la revendication 8 adapté pour mettre en œuvre le procédé précédemment décrit selon la revendication 1.

Suivant un mode de réalisation, le groupe d'au moins un capteur est choisi parmi des capteurs passifs, des capteurs radar, des capteurs sonar, des capteurs optroniques ou toutes combinaisons de ces capteurs.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 illustre un exemple de géométrie de croisement de 2 pistes;
- La figure 2 représente des étapes possibles du procédé de gestion de croisements selon l'invention ;
- La figure 3 représente un exemple de mode de réalisation d'un dispositif de suivi d'objets mobiles selon l'invention.

Le traitement selon l'invention peut être mis en œuvre par un dispositif de suivi d'objets mobiles comprenant un ou plusieurs capteurs.

Le traitement de gestion des croisements selon l'invention se base sur une modélisation particularisant une piste et sa piste la plus proche parmi l'ensemble des pistes. Pour ce traitement, on supposera que seules deux pistes se croisent et que les autres pistes n'interagissent pas sur ces deux pistes.

Par la suite le traitement de gestion de croisements suivant l'invention va être décrit pour une évolution linéaire des mesures en fonction du temps.

Lorsque les mesures issues du ou des capteurs ne sont pas bruitées, chaque piste k décrit une droite d'équation $A^k.t+B^k$ où t désigne le temps, où $A^k$ désigne le vecteur vitesse d'évolution des mesures de la piste k, et où $B^k$ désigne le vecteur position à l'instant t=0 des mesures de la piste k.

En présence de bruit, pour chaque n, le plot $X_n$ à l'instant $t_n$ est une valeur de mesure ou un vecteur de mesures qui correspond à une parmi K pistes en présence d'un bruit additif centré de densité de probabilité g(.) supposée connue. On peut donc écrire, en écrivant que les plots $X_n$ évoluent linéairement en fonction du temps $t_n$ :

$$X_n = A^{f(n)}t_n + B^{f(n)} + W_n \quad ; \quad n = 1,2,...,N \qquad \text{(Équation 1)}$$

Où $W_n$ correspond à du bruit centré, indépendant en n et de densité de probabilité g(.) et f(.) représente une fonction inconnue de [1,2,...,N] dans [1,2,...,K] indiquant à quelle piste k correspond le plot $X_n$.

L'objectif est de trouver un traitement d'estimation des coefficients $A^k$ et $B^k$, l'indice k représentant la piste, au moyen des plots $X_n$ sans connaître ni la fonction f(.) ni k. Tel que posé, ce problème conduit à une combinatoire énorme et ne peut être traité sous la forme de l'équation 1 en raison du grand nombre d'inconnues, notamment la fonction f(.). On choisit donc de simplifier ce modèle. On a alors recours à un modèle statistique prenant en compte les effets moyens au lieu de la réalité physique exprimée par l'équation 1.

Deux pistes définies par A, B et par A', B' sont considérées comme proches au voisinage de l'instant $t_n$ si $\|(A-A')t+B-B'\| < seuil$ pour t appartenant au voisinage de $t_n$

où $\|X\|^2 = \sum_{p=1}^{P} \frac{x_p^2}{\sigma_p^2}$ avec X = $(x_1, x_2,...,x_P)$, P le nombre de composantes de X et $\sigma_p$ l'écart-type de $x_p$.

Pour une piste proche d'une situation de croisement au voisinage de l'instant $t_n$, le plot $X_n$ appartient soit à la piste d'intérêt, soit à une piste proche de la piste d'intérêt soit à des pistes plus éloignées. On propose d'écrire l'équation 1, à l'instant $t_n$, sous la forme :

$$X_n = \varepsilon_n \left( A t_n + B \right) + \varepsilon'_n \left( A' t_n + B' \right) + \varepsilon''_n U_n + W_n \qquad \text{(Équation 2)}$$

où

$\varepsilon_n, \varepsilon'_n, \varepsilon''_n$ sont tels que seul l'un des trois coefficients est non nul avec une probabilité respective de ces trois états q, q', q'' vérifiant q+q'+q''=1,

A et B correspondent aux coefficients de la piste d'intérêt,

A' et B' correspondent aux coefficients d'une piste proche de la piste d'intérêt,

$W_n$ correspond au bruit qui est centré, indépendant en n et de densité de probabilité g(.),

$U_n$ modélise les autres pistes plus éloignées sous la forme d'une suite de variables aléatoires indépendantes équiréparties sur le domaine de valeur des mesures pour traduire la non connaissance de ces pistes et faire le moins d'hypothèses possibles sur leur valeur.

Il est à noter que le modèle de l'équation 2 est plus général que celui de l'équation 1, car il rend compte aussi, par la présence du terme $U_n$, de fausses mesures ne correspondant à aucune piste.

La densité de probabilité des plots $X_n$, modélisée par l'équation 2 est donnée par l'équation suivante :

$$p(X_n) = q\, g(X_n - At_n - B) + \left[\frac{q''}{c} + q'\, g(X_n - A't_n - B')\right] \qquad \text{(Équation 3)}$$

où c est l'intégrale du domaine des mesures admissibles (c'est à dire du domaine auquel peuvent appartenir les mesures). $\dfrac{1}{c}$ est la densité de probabilité de $U_n$.

Par suite de l'indépendance des $X_n$, on peut écrire :

$$p(X_1, X_2, ..., X_N) = \prod_{n=1}^{N} \left( qg(X_n - At_n - B) + (1-q)h(X_n) \right) \qquad \text{(Équation 4)}$$

avec h(.) défini par :

$$h(X_n) = \frac{q''}{c} + q'\, g(X_n - A't_n - B') \qquad \text{(Équation 5)}$$

Dans l'expression de l'équation 4, le nombre de paramètres du modèle de l'équation 1 a été considérablement réduit tout en préservant sa « nature ». En réalité, l'équation 1 a été plongée dans une famille de modèles représentés par une même mesure de probabilité.

Afin d'estimer la valeur des paramètres A et B des pistes, on propose d'établir l'estimateur du maximum de vraisemblance de (A, B) à partir des plots $X_n$ avec n=1, 2, ..., N en supposant q, q', A' et B' connues. Cela consiste à estimer le paramètre θ d'un modèle aléatoire caractérisé par une densité de probabilité p($X_1$, $X_2$,..., $X_n$, θ) au moyen de :

$$\hat{\theta} = \underset{\theta}{Arg\, Max}\, p(X_1, X_2, ..., X_N, \theta)$$

Où $X_1$, $X_2$,..., $X_n$ sont les plots issus du ou des capteurs.

A partir des équations 4 et 5 on obtient :

$$\ln\big(p(X_1, X_2, ..., X_N, A, B)\big) = \sum_{n=1}^{N} \ln\left(1 + q\, \frac{g(X_n - At_n - B) - h(X_n)}{h(X_n)}\right) + \sum_{n=1}^{N} \ln\big(h(X_n)\big)$$

et

$$\underset{A,B}{Arg\, Max}\, \ln\big(p(X_1, X_2, ..., X_N, A, B)\big) = \underset{A,B}{Arg\, Max} \sum_{n=1}^{N} \ln\left(1 + q\, \frac{g(X_n - At_n - B) - h(X_n)}{h(X_n)}\right)$$

On propose d'optimiser la recherche du maximum pour les cas les plus difficiles, c'est-à-dire lorsque l'on voit très peu la piste d'intérêt. Cela se traduit par des valeurs de q proches de 0.

Après un développement limité au 1er ordre en q on trouve :

$$\big(\hat{A}, \hat{B}\big) = \underset{A,B}{Arg\, Max} \sum_{n=1}^{N} \frac{g(X_n - At_n - B)}{h(X_n)} \qquad \text{(Équation 6)}$$

La formule (6) doit être comprise dans le sens suivant: on recherche tous les maxima locaux de la fonction à maximiser de façon à trouver les paramètres ($A^k$, $B^k$) de toutes les pistes. On remarque aussi que le traitement de l'équation 6 suppose la connaissance des paramètres A', B', q et q' qui interviennent dans l'expression de *h*(.).

Deux cas sont intéressants à examiner :

Un premier cas correspond à la situation où, quelles que soient les pistes k et j de 1, 2, ..., K , et $t_n$ :

$$\underset{t_n}{Min}\left\|\left(A^k - A^j\right)_n + \left(B^k - B^j\right)\right\|^2 > \text{seuil} \qquad \text{(Équation 7)}$$

Ce cas correspond à la situation où aucun croisement de piste n'intervient pendant la durée du traitement. On a alors $h(X_n) \approx q''/_c$ qui est égale à une constante. Le traitement de l'équation 6 se simplifie donc en:

$$\left(\hat{A}, \hat{B}\right) = Arg\,\underset{A,B}{Max} \sum_{n=1}^{N} g\left(X_n - At_n - B\right) \qquad \text{(Équation 8)}$$

Dans ce premier cas, aucune connaissance des paramètres des autres pistes ou de q et q' n'est nécessaire au traitement, il y a découplage total entre les pistes.

Un deuxième cas correspond à la situation où la condition de l'équation 7 n'est pas respectée. Cela correspond à une situation de croisement de pistes. Comme vu précédemment, on suppose que pour l'instant où le croisement se produit, il n'y a que deux pistes qui se croisent.

On considère que l'ensemble des mesures est divisé en sous-ensembles ou blocs de N mesures numérotés l=0, 1, 2, ...de sorte que le plot d'indice n devient un plot indexé $l\,N + p$ avec $0 \le p < N$.

A partir des équations 5 et 6 on obtient pour le bloc l :

$$\left(\hat{A}_l, \hat{B}_l\right) = Arg\,\underset{A,B}{Max} \sum_{m=0}^{l} \sum_{p=0}^{N-1} \frac{g\left(X_{mN+p} - At_{mN+p} - B\right)}{\dfrac{q''}{c} + q'\,g\left(X_{mN+p} - A't_{mN+p} - B'\right)} \qquad \text{(Équation 9)}$$

De façon à définir un traitement réalisable sur l'ensemble des blocs, on suppose que l'on dispose des estimés au rang l-1 nécessaires au calcul de $\hat{A}_l$ et $\hat{B}_l$. On connaît donc pour chaque piste : $\hat{A}_{l-1}^k, \hat{B}_{l-1}^k, \hat{q}_{l-1}^k, \hat{q}_{l-1}''^k/c = \hat{r}_{l-1}^k$, et on propose d'estimer $A^k$ et $B^k$ au rang $l$, au vu de l'équation 9 par :

$$\left(\hat{A}_l^k, \hat{B}_l^k\right) = Arg\,\underset{A,B}{Max} \sum_{m=0}^{l} \sum_{p=0}^{N-1} \frac{g\left(X_{mN+p} - At_{mN+p} - B\right)}{\hat{r}_{l-1}^k + \displaystyle\sum_{\substack{j=1 \\ j \neq k}}^{K} \hat{q}_{l-1}^j\,g\left(X_{mN+p} - \hat{A}_{(m-1)N+p}^j\,t_{mN+p} - \hat{B}_{(m-1)N+p}^j\right)}$$

$$\text{(Équation 10)}$$

où

$c\,\hat{r}_{l-1}^k$ représente la proportion de plots $X_n$ non classés dans la piste k pour $n=1,2,...,(l-1)N$, (on néglige la proportion des pistes qui ont été ambiguës avec la piste k antérieurement à l'instant de calcul),

$\hat{q}_{l-1}^j$ représente la proportion de plots $X_n$ classés dans la piste j pour $n=1,2,..., (l-1)N$.

Au rang l, la valeur $\hat{q}_l^k$ est mise à jour pour la piste k par la nouvelle proportion de plots affectés à la piste k.

Compte tenu du fait que l'on considère que seules deux pistes se croisent, on peut également noter que dans la somme, au dénominateur de l'équation 10, au plus un terme est non nul.

La maximisation de l'équation 10 peut être obtenue de différentes manières.

Selon une première manière, la maximisation est faite par un calcul de la fonction à maximiser sur une grille de valeurs de A et B autour de l'estimé précédent $\left(\hat{A}_{l-1}^k, \hat{B}_{l-1}^k\right)$.

Suivant une deuxième méthode, la maximisation est faite par un algorithme du gradient (méthode de Newton) à partir de $\left( \hat{A}_{l-1}^k, \hat{B}_{l-1}^k \right)$. Ceci est surtout usité lorsque la longueur N des blocs égale 1. Dans ce cas l'indice l est confondu avec l'indice n. On définit $C_l^k = A^k t_l + B^k$, et on trouve après prise du gradient :

$$\begin{cases} \hat{C}_l^k = \hat{C}_{l-1}^k + \hat{A}_{l-1}^k \left( t_l - t_{l-1} \right) + \hat{\alpha}_{l-1}^k M_1 \ g'\left( X_l - \hat{C}_{l-1}^k - \hat{A}_{l-1}^k \left( t_l - t_{l-1} \right) \right) \\ \hat{A}_l^k = \quad \hat{A}_{l-1}^k \quad + \hat{\alpha}_{l-1}^k \ M_2 \ g'\left( X_l - \hat{C}_{l-1}^k - \hat{A}_{l-1}^k \left( t_l - t_{l-1} \right) \right) \end{cases}$$

(Équation 11)

Dans cette écriture :

- $g'(X)$ est le gradient de g(.) par rapport à X ;

- $M_1$ et $M_2$ sont deux gains (éventuellement matriciels si l'on tient compte de la matrice des dérivées secondes dans la méthode de Newton) qui assurent la stabilité du filtre défini par l'équation 11 et règlent sa bande ;

et $\hat{\alpha}_{l-1}^k$ est un paramètre de pondération dépendant de l'état d'ambiguïté de la piste considérée qui est défini par :

$$\hat{\alpha}_{l-1}^k = \frac{\hat{r}_{l-1}^k}{\hat{r}_{l-1}^k + \sum_{\substack{j=1 \\ j \neq k}}^{K} \hat{q}_{l-1}^j \ g\left( X_l - \hat{C}_{l-1}^j - \hat{A}_{l-1}^j \left( t_l - t_{l-1} \right) \right)} \qquad \text{(Équation 12)}$$

L'influence de ce paramètre de pondération $\hat{\alpha}_{l-1}^k$ peut être comprise comme suit. Lorsqu'aucun croisement de pistes n'a lieu à l'instant $t_l$, on a $\sum_{\substack{j=1 \\ j \neq k}}^{K} \hat{q}_{l-1}^j \ g\left( X_l - \hat{C}_{l-1}^j - \hat{A}_{l-1}^j \left( t_l - t_{l-1} \right) \right) = 0$, et $\hat{\alpha}_{l-1}^k = 1$. Le filtre de l'équation 11 se comporte alors comme les filtres classiques employés en poursuite multicibles. On a une recopie de la dynamique d'évolution des pistes et l'innovation (différence entre le plot et l'estimé du plot) est passée dans une non linéarité (fenêtrage appelé « gate » selon la terminologie anglo saxonne). Dans ce cas, le filtre de l'équation 11 correspond à l'algorithme du gradient pour le traitement de l'équation 8, et la méthode proposée ici permet de préciser le type de non-linéarité que l'on doit employer.

En cas de croisement de pistes, le paramètre $\hat{\alpha}_{l-1}^k$ devient strictement inférieur à 1 et décroit jusqu'à l'instant de croisement. Ce paramètre croit ensuite jusqu'à 1. Au fur et à mesure que la valeur de ce paramètre diminue, le filtre tient de moins en moins compte du plot X aux différents instants. Ceci peut s'interpréter comme un passage progressif « en mémoire », qui, lui, est caractérisé par $\hat{\alpha}_{l-1}^k = 0$. Cette mise en mémoire est ensuite progressivement abandonnée au fur et à mesure que les pistes s'éloignent l'une de l'autre.

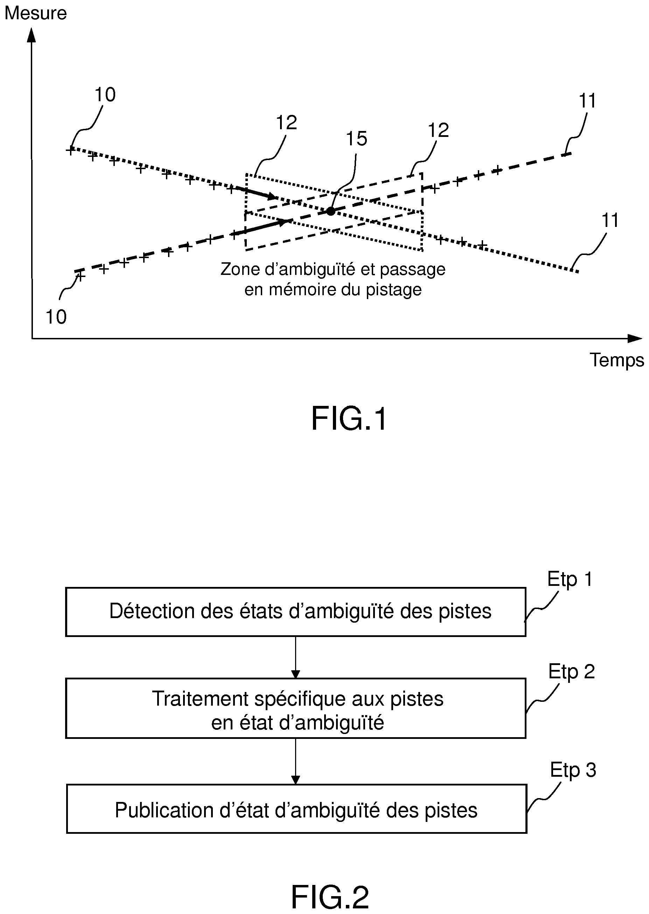

La figure 1 représente, par un schéma, la géométrie d'un exemple de croisement de deux pistes 11.

Sur ce schéma sont représentées les positions 10 successives de plots formant deux pistes 11 se croisant en un point d'intersection 15. Chaque plot correspond à un vecteur de mesures X délivré par un ou plusieurs capteurs. Les plots successifs d'une piste caractérisent le mouvement de l'objet mobile suivi.

A l'approche du point d'intersection 15, les pistes 11 entrent dans une zone d'ambiguïté 12. Cette zone 12 correspond à la période pendant laquelle les pistes sont proches, et où il devient difficile de savoir à quelle piste appartiennent les plots 10.

La figure 2 représente des étapes possibles du procédé de gestion de croisements dans le suivi d'objets mobiles suivant l'invention. Ce procédé peut comprendre pour chaque piste à chaque instant $t_n$, une étape Etp1 de test de l'état d'ambiguïté de la piste considérée afin de déterminer si la piste considérée est ambiguë ou non à l'instant considéré et, si la piste est ambiguë, une étape Etp2 de traitement spécifique de l'estimé de la piste tenant compte de l'ambiguïté de la piste sous test à l'instant $t_n$ considéré.

Le procédé peut également comprendre une étape Etp3 de notification de l'état d'ambiguïté de la piste sous test à l'instant $t_n$ considéré.

L'étape Etp1 de détection des états d'ambiguïté des pistes consiste, pour chaque piste à l'instant $t_l$, à vérifier si cette piste est dans un état d'ambiguïté ou non. Pour cela on définit un critère de séparation des pistes.

Suivant un mode de mise en œuvre, la piste k est dite non ambiguë à l'instant $t_l$ s'il y a vérification du test :

$$\sum_{\substack{j=1 \\ j\neq k}}^{K} \hat{q}_{l-1}^{j}\, g\left(\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right) \quad < \quad \varepsilon\, \hat{r}_{l-1}^{k}$$

$$\text{(Équation 13)}$$

où

K représente le nombre total de pistes créées jusqu'à l'instant l-1, $\hat{C}_{l}^{j} = \hat{A}_{l}^{j}\, t_l + \hat{B}_{l}^{j}$ représente l'estimé du vecteur position de la piste j à l'instant $t_l$, $\hat{A}_{l}^{j}$ l'estimé du vecteur vitesse de la piste j à l'instant $t_l$ et $\hat{B}_{l}^{j}$ l'estimé du vecteur position de la piste j à l'instant t=0.

$\hat{q}_{l-1}^{j}$ représente l'estimé de la proportion des plots $X_n$ classés dans la piste j pour $n = 1,2,...,(l-1)N$,

g(.) représente la densité de probabilité du bruit de mesure,

$\varepsilon$ représente un coefficient. Dans un mode de mise en œuvre ce coefficient vaut 0,1,

$\hat{r}_{l-1}^{k} = \hat{q}_{l-1}^{"k}/c$ où $\hat{q}_{l-1}^{"k}$ représente l'estimé de la proportion des plots $X_n$ classés dans une piste éloignée de la piste k et c l'intégrale du domaine des mesures admissibles.

Lorsque la piste k ne vérifie pas le test, la piste k est dite ambiguë à l'instant $t_l$.

Lors de cette étape un indicateur peut être mis à jour pour la piste considérée pour indiquer qu'à l'instant considéré, la piste est dans un état d'ambiguïté ou non.

La détection d'ambiguïté est effectuée à chaque instant $t_n$, l'intervalle de temps entre deux instant $t_n$ étant régulier ou non.

Suivant un autre mode de mise en œuvre, une piste k est dite non ambiguë à l'instant $t_l$ si pour toute piste j≠k on a :

$$\left\|\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right\| > S$$

où

$\|.\|$ est la norme définie pour un vecteur $X=(x_p)$ par $\|X\| = \sup\left(\dfrac{|x_p|}{\sigma_p}\right)$ où $\sigma_p$ est l'écart-type pour la $p^{\text{ième}}$ composante de
X dans la densité g(X)
S représente un seuil prédéfini.

Lorsqu'une piste est en état d'ambiguïté, un traitement spécifique à la gestion de croisements est ajouté au traitement de pistage. Ce traitement spécifique consiste en un traitement récursif ou filtre récursif effectué à l'aide de l'équation 11 présentée précédemment.

Suivant un premier mode de mise en œuvre du procédé selon l'invention, l'étape Etp2 de traitement spécifique des données relatives aux pistes en état d'ambiguïté consiste à effectuer un passage en mémoire, c'est à dire à ne pas prendre en compte les nouvelles mesures pour la mise à jour de la piste pendant la période où cette piste est en zone d'ambiguïté. Ceci revient à dire que les paramètres pour le calcul de prédiction de position n'évoluent plus durant l'état d'ambiguïté. En d'autre terme, ceci revient à annuler le paramètre $\hat{\alpha}_{l-1}^{k}$ de l'équation 11 lorsque la piste est ambiguë afin de ne plus prendre en compte les mesures. Lorsque la piste n'est pas ambiguë, la valeur de ce paramètre est fixée à 1.

Suivant un autre mode de mise en œuvre, on effectue une mise en mémoire progressive afin de faire une transition moins brutale par rapport à la méthode précédente. Cette transition plus douce est réalisée grâce au calcul du paramètre $\hat{\alpha}_{l-1}^{k}$ à l'aide de l'équation 12 vue précédemment. Lorsque la piste entre dans la zone d'ambiguïté, la valeur du paramètre $\hat{\alpha}_{l-1}^{k}$ commence à décroître et progressivement, les plots sont de moins en moins pris en compte. De même, au fur et à mesure que l'objet suivi s'éloigne du point d'intersection des deux pistes, la valeur du paramètre $\hat{\alpha}_{l-1}^{k}$ va croitre progressivement jusqu'à une valeur sensiblement égale à 1.

Le « passage en mémoire » permet de ne pas faire dévier les pistes par des erreurs dues à des mélanges de plots entre les deux pistes au moment du croisement.

De façon avantageuse, la mise en œuvre de la première méthode est beaucoup moins coûteuse en terme de calcul.

L'état d'ambiguïté est transitoire : il commence, dure et se termine en fonction de l'évolution des mesures sur les objets mobiles suivis dans le temps. Suivant un mode de mise en œuvre du procédé, lorsque la durée pendant laquelle une piste est considérée comme ambiguë excède un seuil prédéterminé, cette piste est considérée comme non ambiguë afin d'éviter de rester trop longtemps dans une condition d'ambiguïté.

Les deux variantes de traitement décrites précédemment supposent une évolution linéaire des mesures en fonction du temps. Ceci donne une souplesse pour le suivi des objets mobiles. Cependant, dans certains cas il peut être nécessaire de prendre en compte un ordre plus élevé que l'ordre deux pour pouvoir mieux suivre les évolutions de ces objets par exemple en prenant en compte l'accélération des mouvements relatifs.

Les traitements peuvent se généraliser, par exemple, à l'ordre trois pour des évolutions de plots qui ne seraient pas localement tout à fait linéaires, et pour tous les ordres supérieurs ou égaux à 2.

En conservant les notations précédentes, l'équation 1 devient :

$$X_n = D^{f(n)} t_n^2 + A^{f(n)} t_n + B^{f(n)} + W_n \quad ; \quad n = 1,2,...,N \qquad \text{(Équation 14)}$$

où le paramètre D permet de faire intervenir un terme d'accélération en fonction du temps.

L'équation 9 devient :

$$\left(\hat{A}_l, \hat{B}_l, \hat{D}_l\right) = Arg\,\underset{A,B,D}{Max} \sum_{m=0}^{l}\sum_{p=0}^{N-1} \frac{g\left(X_{mN+p} - Dt_{mN+p}^2 - At_{mN+p} - B\right)}{\dfrac{q''}{c} + q'\,g\left(X_{mN+p} - D't_{mN+p}^2 - A't_{mN+p} - B'\right)}$$

$$\text{(Équation 15)}$$

L'équation 10 devient :

$$\left(\hat{A}_l^k, \hat{B}_l^k, \hat{D}_l^k\right) =$$
$$Arg\,\underset{A,B,D}{Max} \sum_{m=0}^{l}\sum_{p=0}^{N-1} \frac{g\left(X_{mN+p} - Dt_{mN+p}^2 - At_{mN+p} - B\right)}{\hat{r}_{l-1}^k + \displaystyle\sum_{\substack{j=1\\j\neq k}}^{K}\hat{q}_{l-1}^j\,g\left(X_{mN+p} - \hat{D}_{(m-1)N+p}^j\,t_{mN+p}^2 - \hat{A}_{(m-1)N+p}^j\,t_{mN+p} - \hat{B}_{(m-1)N+p}^j\right)}$$

$$\text{(Équation 16)}$$

Le traitement récursif de l'équation 11 peut se généraliser de façon similaire, ainsi que les équations 12 et 13.

Au cours d'une étape Etp3, l'information d'état d'ambiguïté des pistes est publiée avec la piste. Suivant un mode de mise en œuvre chaque piste comprend par exemple un indicateur indiquant l'état d'ambiguïté et donc si la mesure correspond à une extrapolation ou à une vraie mesure. Ceci permet de savoir en sortie si la publication de la piste est issue de calculs sur les mesures (cas de la piste en dehors d'une zone d'ambiguïté) ou issue de la mémoire de la piste (cas du passage de la piste en zone d'ambiguïté). Le dispositif de traitement en aval vers lequel les données sont publiées sait ainsi, parmi les données transmises, lesquelles sont ambiguës et lesquelles ne le sont pas.

Le procédé de gestion de croisements selon l'invention peut être appliqué au suivi d'objets mobiles comme par exemple des aéronefs ou des navires. Il peut être mis en œuvre par un ou plusieurs dispositifs de suivi d'objet mobile comprenant au moins un capteur. Le ou les capteurs peuvent être des capteurs passifs, des capteurs radar, des capteurs sonar, des capteurs optroniques ou toutes combinaisons de ces capteurs.

L'invention a également pour objet un dispositif de suivi d'objets mobiles adapté pour mettre en œuvre le procédé de gestion de croisements précédemment décrit.

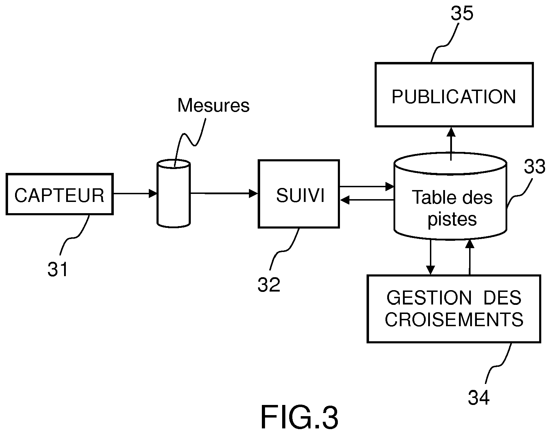

La figure 3 représente un exemple de mode de réalisation d'un dispositif de suivi d'objets mobiles suivant l'invention.

Le dispositif comprend au moins un capteur 31 qui délivre différentes mesures correspondant à des objets se déplaçant dans la zone surveillée. Suivant un mode de réalisation, le ou les capteurs 31 peuvent être des capteurs de Mesure de Renseignement Electronique (ou ESM), des capteurs radar, des capteurs optroniques ou toutes combinaisons de ces capteurs dans le cas d'un dispositif multicapteurs.

Un module de suivi 32 prend chaque vecteur de mesures $X_n$ pour mettre à jour les pistes correspondantes dans une table des pistes 33. Ce module effectue le suivi dans le temps des objets mobiles en utilisant une table des pistes 33 mémorisant des informations sur les objets suivis et en utilisant les vecteurs de mesures ou plots $X_n$.

La table des pistes 33 contient, pour chaque objet suivi, les informations actuelles et des informations résumant les vecteurs de mesures reçus dans un passé proche. La table des pistes 33 contient ainsi le même type d'information que les mesures c'est-à-dire une ou plusieurs informations de position relative indiquant la situation de l'objet dans l'espace relativement au capteur et éventuellement des informations de description des objets suivis. Le contenu de la table des pistes 33 évolue ainsi au fil du temps en fonction des mesures fournies par le ou les capteurs 31.

Le dispositif selon l'invention comprend également un module de suivi 32. Ce module a d'abord pour but de déterminer à quelle piste, dans la table 33, attribuer un vecteur de mesures, et ensuite de mettre à jour les informations de la piste en utilisant les données plus récentes contenues dans le vecteur de mesures. Le module de suivi 32 peut aussi créer une nouvelle piste si un vecteur de mesures ne peut pas être associé à une piste existante dans la table, ou éventuellement supprimer une piste s'il n'y a plus de mise à jour pour cette piste depuis longtemps.

Un module de gestion de croisements 34 vient agir sur la table des pistes en cas d'ambiguïté entre pistes en appliquant un ensemble de traitements supplémentaires comme vu précédemment. Ce module 34 vient compléter le traitement de suivi des objets.

Le dispositif de suivi comprend un module de publication 35 configuré pour transmettre vers l'extérieur des informations sur le suivi des objets. Les données publiées peuvent correspondre à ce qui est nouveau comme par exemple une ou plusieurs nouvelles pistes ou des évolutions récentes de pistes. Ces données sont par exemple transmises à un autre système, à un ou plusieurs étages de traitement plus en aval comme un affichage, une autre plateforme dans le cas où le dispositif est implanté dans un système multi plateformes, etc.

Les différents modules décrits précédemment peuvent être un ou plusieurs microprocesseurs, processeurs, ordinateurs ou tous autres moyens équivalents programmés de façon opportune.

## Revendications

1. Procédé de gestion de croisements de pistes mis en œuvre par au moins un dispositif de suivi d'objets mobiles comprenant un groupe d'au moins un capteur (31), le suivi d'objets mobiles consistant à estimer un ensemble de pistes correspondant aux différents objets mobiles perçus par le groupe d'au moins un capteur (31), chaque piste correspondant à un ensemble de plots successifs traduisant le mouvement d'un même objet mobile, ledit procédé étant **caractérisé en ce qu'**il comprend pour chaque piste à un instant considéré, une étape Etp1 de test afin de déterminer si la piste considérée est ambiguë ou non à l'instant considéré, une piste k étant dite non ambiguë à l'instant $t_l$, si elle vérifie, la relation :

$$\sum_{\substack{j=1 \\ j \neq k}}^{K} \hat{q}_{l-1}^{j} \, g\left(\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right) < \varepsilon.\,\hat{r}_{l-1}^{k}$$

Ou si pour toute piste j≠k elle vérifie la relation :

$$\left\|\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right\| > S$$

Dans lesquelles :

K représente le nombre total de pistes crées jusqu'à l'instant l-1,

$\hat{q}_{l-1}^{j}$ représente l'estimé de la proportion de plots classés dans la piste j jusqu'à l'instant l-1,

g(.) représente une densité de probabilité,

$\hat{C}_{l-1}^{j} = \hat{A}_{l-1}^{j} t_{l-1} + \hat{B}_{l-1}^{j}$ représente l'estimé du vecteur position de la piste j à l'instant $t_{l-1}$,

$\hat{A}_{l-1}^{j}$ représente l'estimé de la vitesse de la piste j à l'instant $t_{l-1}$ et $\hat{B}_{l-1}^{j}$ l'estimé du vecteur position de la piste j à l'instant t=0,

$\hat{r}_{l-1}^{k} = \hat{q}_{l-1}^{"k}/c$ où $\hat{q}_{l-1}^{"k}$ représente l'estimé de la proportion des plots $X_n$ classés dans une piste éloignée de la piste k et c l'intégrale du domaine des mesures admissibles

$\|.\|$ représente la norme définie pour un vecteur $X=(x_p)$ par $\|X\| = \sup\left(\dfrac{|x_p|}{\sigma_p}\right)$ avec $\sigma_p$ l'écart-type pour la

$p^{ième}$ composante de X dans la densité g(X),

S représente un seuil prédéterminé

et, si la piste est ambiguë, une étape Etp2 de traitement spécifique de l'estimé de la piste.

2. Procédé selon la revendication précédente selon lequel il comprend en outre une étape Etp3 de notification de l'état d'ambiguïté de la piste sous test à l'instant considéré.

3. Procédé selon une des revendications précédentes selon lequel l'étape de traitement spécifique des estimés des pistes en état d'ambiguïté à un instant $t_l$ est effectuée par un filtre récursif défini par :

$$\begin{cases} \hat{C}_{l}^{k} = \hat{C}_{l-1}^{k} + \hat{A}_{l-1}^{k}(t_l - t_{l-1}) + \hat{\alpha}_{l-1}^{k} M_1\ g'\left(X_l - \hat{C}_{l-1}^{k} - \hat{A}_{l-1}^{k}(t_l - t_{l-1})\right) \\ \\ \hat{A}_{l}^{k} = \hat{A}_{l-1}^{k} + \hat{\alpha}_{l-1}^{k}\ M_2\ g'\left(X_l - \hat{C}_{l-1}^{k} - \hat{A}_{l-1}^{k}(t_l - t_{l-1})\right) \end{cases}$$

Où

$X_l$ représente le plot mesuré à l'instant $t_l$

$\hat{C}_{l}^{k} = \hat{A}_{l}^{k} t_l + \hat{B}_{l}^{k}$ représente l'estimé de la piste considérée à l'instant $t_l$,

$\hat{\alpha}_{l-1}^{k}$ représente un paramètre de pondération $M_1$ et $M_2$ représentent des gains matriciels assurant la stabilité du filtre

g'(X) représente le gradient de la densité de probabilité g(.).

4. Procédé selon la revendication précédente selon lequel le paramètre $\hat{\alpha}_{l-1}^{k}$ est défini par

$$\hat{\alpha}_{l-1}^{k} = \frac{\hat{r}_{l-1}^{k}}{\hat{r}_{l-1}^{k} + \sum\limits_{\substack{j=1 \\ j \neq k}}^{K} \hat{q}_{l-1}^{j}\ g\left(X_l - \hat{C}_{l-1}^{j} - \hat{A}_{l-1}^{j}(t_l - t_{l-1})\right)}$$

Où

$\hat{r}_{l-1}^{k} = \hat{q}_{l-1}^{"k}/c$ .

$\hat{q}_{l-1}^{j}$ représente la proportion des plots $X_n$ classés dans la piste j à l'instant l-1,

$\hat{C}_{l-1}^j$ représente l'estimé de la piste considérée,

$\hat{A}_{l-1}^j$ représente l'estimé de la vitesse de la piste considérée

5. Procédé selon la revendication 3 selon lequel le paramètre $\hat{\alpha}_{l-1}^k$ est égal à 0 lorsque la piste est ambiguë et est égal à 1 dans le cas contraire.

6. Procédé selon une des revendications précédentes selon lequel si la durée pendant laquelle une piste est considérée comme ambiguë est supérieure à un seuil prédéterminé, ladite piste est considérée comme non ambiguë.

7. Procédé selon une des revendications précédentes selon lequel le groupe d'au moins un capteur est choisi parmi des capteurs passifs, des capteurs radar, des capteurs sonar, des capteurs optroniques ou toutes combinaisons de ces capteurs.

8. Dispositif de suivi d'objets mobiles adapté pour mettre en œuvre le procédé selon une des revendications précédentes **caractérisé en ce qu'**il comprend un groupe d'au moins un capteur (31), un module de suivi (32) configuré pour effectuer le suivi dans le temps des objets mobiles à partir des plots et élaborer et/ou mettre à jour des pistes, une table des pistes (33) contenant la liste des pistes suivies par le dispositif, un module de gestion des croisements (34) configuré pour appliquer un ensemble de traitements en cas d'ambiguïté de piste, une piste k étant dite non ambiguë à l'instant $t_l$, si elle vérifie, la relation :

$$\sum_{\substack{j=1 \\ j \neq k}}^{K} \hat{q}_{l-1}^j \, g\left(\hat{C}_{l-1}^k + \hat{A}_{l-1}^k\left(t_l - t_{l-1}\right) - \hat{C}_{l-1}^j - \hat{A}_{l-1}^j\left(t_l - t_{l-1}\right)\right) < \varepsilon . \hat{r}_{l-1}^k$$

Ou si pour toute piste j≠k elle vérifie la relation :

$$\left\| \hat{C}_{l-1}^k + \hat{A}_{l-1}^k\left(t_l - t_{l-1}\right) - \hat{C}_{l-1}^j - \hat{A}_{l-1}^j\left(t_l - t_{l-1}\right) \right\| > S$$

Dans lesquelles :

K représente le nombre total de pistes créées jusqu'à l'instant l-1,

$\hat{q}_{l-1}^j$ représente l'estimé de la proportion de plots classés dans la piste j jusqu'à l'instant l-1,

g(.) représente une densité de probabilité,

$\hat{C}_{l-1}^j = \hat{A}_{l-1}^j t_{l-1} + \hat{B}_{l-1}^j$ représente l'estimé du vecteur position de la piste j à l'instant $t_{l-1}$,

$\hat{A}_{l-1}^j$ représente l'estimé de la vitesse de la piste j à l'instant $t_{l-1}$ et $\hat{B}_{l-1}^j$ l'estimé du vecteur position de la piste j à l'instant t=0,

$\hat{r}_{l-1}^k = \hat{q}_{l-1}^{"k} / c$ où $\hat{q}_{l-1}^{"k}$ représente l'estimé de la proportion des plots $X_n$ classés dans une piste éloignée de la piste k et c l'intégrale du domaine des mesures admissibles

‖.‖ représente la norme définie pour un vecteur $X=(x_p)$ par $\|X\| = \sup\left(\dfrac{|x_p|}{\sigma_p}\right)$ avec $\sigma_p$ l'écart-type pour la

$p^{\text{ième}}$ composante
de X dans la densité g(X),
S représente un seuil prédéterminé.

et un module de publication (35) configuré pour transmettre vers l'extérieur des données de la table des pistes (33).

9. Dispositif selon la revendication précédente selon lequel le groupe d'au moins un capteur (31) est choisi parmi des capteurs passifs, des capteurs radar, des capteurs sonar, des capteurs optroniques ou toutes combinaisons de ces capteurs.

**Patentansprüche**

1.  Verfahren zum Verwalten von Bahnüberkreuzungen, durchgeführt von mindestens einer Vorrichtung zum Verfolgen von beweglichen Objekten, umfassend eine Gruppe von mindestens einem Sensor (31), wobei die Verfolgung von beweglichen Objekten darin besteht, eine Reihe von Bahnen zu schätzen, die den unterschiedlichen beweglichen Objekten entsprechen, die von der Gruppe von mindestens einem Sensor (31) erfasst werden, wobei jede Bahn einer Reihe von aufeinander folgenden Plots entspricht, die die Bewegung eines beweglichen Objekts umsetzen, wobei das Verfahren **dadurch gekennzeichnet ist, dass** es für jede Bahn zu einem betrachteten Zeitpunkt einen Schritt Etp1 des Prüfens beinhaltet, um festzustellen, ob die betrachtete Bahn zu dem betrachteten Zeitpunkt mehrdeutig ist oder nicht, wobei eine Bahn k zum Zeitpunkt $t_l$ als nicht mehrdeutig angesehen wird, wenn die folgende Relation verifiziert ist:

$$\sum_{\substack{j=1 \\ j \neq k}}^{K} \hat{q}_{l-1}^{j} \, g\left( \hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right) \right) < \varepsilon . \hat{r}_{l-1}^{k}$$

oder wenn für jede Bahn j≠k die folgende Relation verifiziert ist:

$$\left\| \hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right) \right\| > S$$

wobei:

K die Gesamtzahl der bis zum Zeitpunkt I-1 erzeugten Bahnen repräsentiert,

$\hat{q}_{l-1}^{j}$ die Schätzung des Anteils von in der Bahn j bis zum Zeitpunkt I-1 klassifizierten Plots repräsentiert,

g(.) eine Wahrscheinlichkeitsdichte repräsentiert,

$\hat{C}_{l-1}^{j} = \hat{A}_{l-1}^{j} t_{l-1} + \hat{B}_{l-1}^{j}$ die Schätzung des Positionsvektors der Bahn j zum Zeitpunkt $t_{l-1}$ repräsentiert,

$\hat{A}_{l-1}^{j}$ die Schätzung der Geschwindigkeit der Bahn j zum Zeitpunkt $t_{l-1}$ repräsentiert und $\hat{B}_{l-1}^{j}$ die Schätzung des Positionsvektors der Bahn j zum Zeitpunkt t=0 repräsentiert,

$\hat{r}_{l-1}^{k} = \hat{q}_{l-1}^{"k} / c$ wo $\hat{q}_{l-1}^{"k}$ die Schätzung des Anteils der klassifizierten Plots $X_n$ in einer von der Bahn k entfernten Bahn repräsentiert und c das Integral des Bereichs der zulässigen Messwerte ist

‖.‖ die Norm repräsentiert, definiert für einen Vektor $X=(x_p)$ durch $\left\| X \right\| = \sup\left( \dfrac{\left| x_p \right|}{\sigma_p} \right)$, wobei $\sigma_p$ der Abweichungstyp für die p-te Komponente von X in der Dichte g(X) ist,

S eine vorbestimmte Schwelle repräsentiert,

und, wenn die Bahn mehrdeutig ist, einen Schritt Etp2 des spezifischen Behandelns der Schätzung der Bahn.

2.  Verfahren nach dem vorherigen Anspruch, das ferner einen Schritt Etp3 des Meldens des Mehrdeutigkeitszustands der geprüften Bahn zum betrachteten Zeitpunkt beinhaltet.

3.  Verfahren nach einem der vorherigen Ansprüche, bei dem der Schritt des spezifischen Behandelns der Schätzungen der Bahnen im Mehrdeutigkeitszustand zu einem Zeitpunkt $t_l$ durch ein rekursives Filter erfolgt, definiert durch:

$$\begin{cases} \hat{C}_l^k = \hat{C}_{l-1}^k + \hat{A}_{l-1}^k \left( t_l - t_{l-1} \right) + \hat{\alpha}_{l-1}^k M_1 \ g'\left( X_l - \hat{C}_{l-1}^k - \hat{A}_{l-1}^k \left( t_l - t_{l-1} \right) \right) \\[2em] \hat{A}_l^k = \hat{A}_{l-1}^k + \hat{\alpha}_{l-1}^k \ M_2 \ g'\left( X_l - \hat{C}_{l-1}^k - \hat{A}_{l-1}^k \left( t_l - t_{l-1} \right) \right) \end{cases}$$

wobei $X_l$ den zum Zeitpunkt $t_l$ gemessenen Plot repräsentiert

$\hat{C}_l^k = \hat{A}_l^k t_l + \hat{B}_l^k$ die Schätzung der zum Zeitpunkt $t_l$ betrachteten Bahn repräsentiert,

$\hat{\alpha}_{l-1}^k$ einen Gewichtungsparameter repräsentiert,

$M_1$ und $M_2$ Verstärkungsmatrizen repräsentieren, die die Stabilität des Filters gewährleisten, g'(X) den Gradienten der Wahrscheinlichkeitsdichte g(.) repräsentiert.

4. Verfahren nach dem vorherigen Anspruch, bei dem der Parameter $\hat{\alpha}_{l-1}^k$ definiert wird durch:

$$\hat{\alpha}_{l-1}^k = \frac{\hat{r}_{l-1}^k}{\hat{r}_{l-1}^k + \sum_{\substack{j=1 \\ j \neq k}}^{K} \hat{q}_{l-1}^j \ g\left( X_l - \hat{C}_{l-1}^j - \hat{A}_{l-1}^j \left( t_l - t_{l-1} \right) \right)}$$

wobei $\hat{r}_{l-1}^k = \hat{q}_{l-1}^{"k}/c$ ist,

$\hat{q}_{l-1}^j$ den Anteil der in der Bahn j zum Zeitpunkt l-1 klassifizierten Plots $X_n$ repräsentiert,

$\hat{C}_{l-1}^j$ die Schätzung der betrachteten Bahn repräsentiert,

$\hat{A}_{l-1}^j$ die Schätzung der Geschwindigkeit der betrachteten Bahn repräsentiert.

5. Verfahren nach Anspruch 3, bei dem der Parameter $\hat{\alpha}_{l-1}^k$ gleich 0 ist, wenn die Bahn mehrdeutig ist, und im gegenteiligen Fall gleich 1 ist.

6. Verfahren nach einem der vorherigen Ansprüche, bei dem, falls die Dauer, während der eine Bahn als mehrdeutig angesehen wird, größer ist als eine vorbestimmte Schwelle, die Bahn als nicht mehrdeutig angesehen wird.

7. Verfahren nach einem der vorherigen Ansprüche, bei dem die Gruppe von mindestens einem Sensor ausgewählt wird aus passiven Sensoren, Radarsensoren, Sonarsensoren, optronischen Sensoren oder allen Kombinationen dieser Sensoren.

8. Vorrichtung zum Verfolgen von beweglichen Objekten, ausgelegt zum Durchführen des Verfahrens nach einem der vorherigen Ansprüche, **dadurch gekennzeichnet, dass** sie Folgendes umfasst: eine Gruppe von mindestens einem Sensor (31), ein Verfolgungsmodul (32), konfiguriert zum Bewirken der Verfolgung von beweglichen Objekten über die Zeit auf der Basis von Plots, und Ausarbeiten und/oder Aktualisieren von Bahnen, eine Tabelle der Bahnen (33), die die Liste der von der Vorrichtung verfolgten Bahnen enthält, ein Modul zum Verwalten von Überkreuzungen (34), konfiguriert zum Anwenden einer Reihe von Behandlungen im Falle von Bahnmehrdeutigkeit, wobei eine Bahn k zum Zeitpunkt $t_l$ dann nicht mehrdeutig ist, wenn sie die folgende Relation verifiziert:

$$\sum_{\substack{j=1 \\ j \neq k}}^{K} \hat{q}_{l-1}^j \ g\left( \hat{C}_{l-1}^k + \hat{A}_{l-1}^k \left( t_l - t_{l-1} \right) - \hat{C}_{l-1}^j - \hat{A}_{l-1}^j \left( t_l - t_{l-1} \right) \right) < \varepsilon . \hat{r}_{l-1}^k$$

oder wenn sie für jede Bahn j≠k die folgende Relation verifiziert:

$$\left\| \hat{C}_{l-1}^{k} + \hat{A}_{l-1}^{k}\left(t_{l} - t_{l-1}\right) - \hat{C}_{l-1}^{j} - \hat{A}_{l-1}^{j}\left(t_{l} - t_{l-1}\right) \right\| > S$$

wobei:

K die Gesamtzahl der bis zum Zeitpunkt I-1 erzeugten Bahnen repräsentiert,

$\hat{q}_{l-1}^{j}$ die Schätzung des Anteils von in der Bahn j bis zum Zeitpunkt I-1 klassifizierten Plots repräsentiert,

g(.) eine Wahrscheinlichkeitsdichte repräsentiert,

$\hat{C}_{l-1}^{j} = \hat{A}_{l-1}^{j} t_{l-1} + \hat{B}_{l-1}^{j}$ die Schätzung des Positionsvektors der Bahn j zum Zeitpunkt $t_{l-1}$ repräsentiert,

$\hat{A}_{l-1}^{j}$ die Schätzung der Geschwindigkeit der Bahn j zum Zeitpunkt $t_{l-1}$ repräsentiert und $\hat{B}_{l-1}^{j}$ die Schätzung des Positionsvektors der Bahn j zum Zeitpunkt t=0 repräsentiert,

$\hat{r}_{l-1}^{k} = \hat{q}_{l-1}^{"k}/c$ wo $\hat{q}_{l-1}^{"k}$ die Schätzung des Anteils der klassifizierten Plots $X_n$ in einer von der Bahn k entfernten Bahn repräsentiert und c das Integral des Bereichs der zulässigen Messwerte ist;

$\|.\|$ die Norm repräsentiert, definiert für einen Vektor $X=(x_p)$ durch $\left\| X \right\| = \sup\left(\dfrac{|x_p|}{\sigma_p}\right)$, wobei $\sigma_p$ der Abweichungstyp für die p-te Komponente von X in der Dichte g(X) ist,

S eine vorbestimmte Schwelle repräsentiert,

und ein Publikationsmodul (35), konfiguriert zum Übertragen der Daten von der Tabelle der Bahnen (33) nach außen.

9. Vorrichtung nach dem vorherigen Anspruch, bei der die Gruppe von mindestens einem Sensor (31) ausgewählt ist aus passiven Sensoren, Radarsensoren, Sonarsensoren, optronischen Sensoren oder einer Kombination dieser Sensoren.

**Claims**

1. A method for managing track crossovers implemented by at least one device for tracking mobile objects comprising a group of at least one sensor (31), the tracking of mobile objects consisting in estimating a set of tracks corresponding to the various mobile objects perceived by the group of at least one sensor (31), each track corresponding to a set of successive plots representing the motion of a given mobile object, said method being **characterized in that** it comprises, for each track at a given time, a step Etp1 of testing intended to determine whether the track in question is ambiguous or not at the given time, a track k being considered unambiguous at the time $t_l$ if it verifies the relationship:

$$\sum_{\substack{j=1 \\ j \neq k}}^{K} \hat{q}_{l-1}^{j}\, g\left(\hat{C}_{l-1}^{k} + \hat{A}_{l-1}^{k}\left(t_{l} - t_{l-1}\right) - \hat{C}_{l-1}^{j} - \hat{A}_{l-1}^{j}\left(t_{l} - t_{l-1}\right)\right) < \varepsilon.\,\hat{r}_{l-1}^{k}$$

or if for any track j≠k it verifies the relationship:

$$\left\| \hat{C}_{l-1}^{k} + \hat{A}_{l-1}^{k}\left(t_{l} - t_{l-1}\right) - \hat{C}_{l-1}^{j} - \hat{A}_{l-1}^{j}\left(t_{l} - t_{l-1}\right) \right\| > S$$

in which relationships:

K is the total number of tracks created up to the time I-1,

$\hat{q}_{l-1}^{j}$ is the estimate of the proportion of plots classified in track j up to the time I-1,

g(.) is a probability density,

**17**

$$\hat{C}_{l-1}^{j} = \hat{A}_{l-1}^{j} t_{l-1} + \hat{B}_{l-1}^{j}$$ is the estimate of the position vector of the track j at the time $t_{l-1}$,

$\hat{A}_{l-1}^{j}$ is the estimate of the velocity of the track j at the time $t_{l-1}$ and $\hat{B}_{l-1}^{j}$ the estimate of the position vector of the track j at the time t=0,

$\hat{r}_{l-1}^{k} = \hat{q}_{l-1}^{"k} / c$ where $\hat{q}_{l-1}^{"k}$ is the estimate of the proportion of the plots $X_n$ classified in a track far removed from the track k and c the integral of the range of the admissible measurements

$\|.\|$ represents the norm defined for a vector $X=(x_p)$ by $\left\|\left|X\right|\right\| = \sup\left(\dfrac{|x_p|}{\sigma_p}\right)$, where $\sigma_p$ is the standard deviation for the $p^{th}$ component of X in the density g(X),
S is a preset threshold,

and, if the track is ambiguous, a step Etp2 of specific processing of the estimate of the track.

2. The method according to the preceding claim, wherein it furthermore comprises a step Etp3 of notification of the state of ambiguity of the track under test at the given time.

3. The method according to one of the preceding claims, wherein the step of specific processing of the estimates of the tracks in an ambiguous state at a time $t_l$ is carried out by a recursive filter defined by:

$$\begin{cases} \hat{C}_{l}^{k} = \hat{C}_{l-1}^{k} + \hat{A}_{l-1}^{k}\left(t_l - t_{l-1}\right) + \hat{\alpha}_{l-1}^{k} M_1 \; g'\left(X_l - \hat{C}_{l-1}^{k} - \hat{A}_{l-1}^{k}\left(t_l - t_{l-1}\right)\right) \\[2em] \hat{A}_{l}^{k} = \hat{A}_{l-1}^{k} + \hat{\alpha}_{l-1}^{k} M_2 \; g'\left(X_l - \hat{C}_{l-1}^{k} - \hat{A}_{l-1}^{k}\left(t_l - t_{l-1}\right)\right) \end{cases}$$

where $X_1$ is the plot measured at the time $t_l$

$\hat{C}_{l}^{k} = \hat{A}_{l}^{k} t_l + \hat{B}_{l}^{k}$ is the estimate of the track in question at the time $t_l$,

$\hat{\alpha}_{l-1}^{k}$ is a weighting parameter,
$M_1$ and $M_2$ are gain matrices s ensuring the stability of the filter,
$g'(X)$ is the gradient of the probability density g(.).

4. The method according to the preceding claim, wherein the parameter $\hat{\alpha}_{l-1}^{k}$ is defined by

$$\hat{\alpha}_{l-1}^{k} = \frac{\hat{r}_{l-1}^{k}}{\hat{r}_{l-1}^{k} + \sum_{\substack{j=1 \\ j \neq k}}^{K} \hat{q}_{l-1}^{j} \; g\left(X_l - \hat{C}_{l-1}^{j} - \hat{A}_{l-1}^{j}\left(t_l - t_{l-1}\right)\right)}$$

where $\hat{r}_{l-1}^{k} = \hat{q}_{l-1}^{"k} / c$.

$\hat{q}_{l-1}^{j}$ is the proportion of the plots $X_n$ classified in the track j at the time l-1,

$\hat{C}_{l-1}^{j}$ is the estimate of the track in question,

$\hat{A}_{l-1}^{j}$ is the estimate of the velocity of the track in question.

5. The method according to claim 3, wherein the parameter $\hat{\alpha}_{l-1}^{k}$ is equal to 0 when the track is ambiguous and is equal to 1 otherwise.

6. The method according to one of the preceding claims, wherein if the length of time for which a track is considered to be ambiguous is longer than a preset threshold, said track is considered to be unambiguous.

7. The method according to one of the preceding claims, wherein the group of at least one sensor is chosen from passive sensors, radar sensors, sonar sensors, optronic sensors or any combination of these sensors.

8. A device for tracking mobile objects, which device is suitable for implementing the method according to one of the preceding claims, **characterized in that** it comprises a group of at least one sensor (31), a tracking module (32) that is configured to track over time mobile objects on the basis of plots and to calculate and/or update tracks, a table of the tracks (33) containing the list of the tracks tracked by the device, a module for managing crossovers (34) that is configured to apply a set of processing operations in case of track ambiguity, a track k being said to be unambiguous at the time $t_l$ if it verifies the relationship:

$$\sum_{\substack{j=1 \\ j \neq k}}^{K} \hat{q}_{l-1}^{j} \, g\left(\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right) < \varepsilon.\hat{r}_{l-1}^{k}$$

or if for any track j≠k it verifies the relationship:

$$\left\|\hat{C}_{l-1}^{k} + \hat{A}_{l-1}^{k}\left(t_l - t_{l-1}\right) - \hat{C}_{l-1}^{j} - \hat{A}_{l-1}^{j}\left(t_l - t_{l-1}\right)\right\| > S$$

in which relationships:

K is the total number of tracks created up to the time l-1,

$\hat{q}_{l-1}^{j}$ is the estimate of the proportion of plots classified in track j up to the time l-1,

g(.) is a probability density,

$\hat{C}_{l-1}^{j} = \hat{A}_{l-1}^{j} t_{l-1} + \hat{B}_{l-1}^{j}$ is the estimate of the position vector of the track j at the time $t_{l-1}$,

$\hat{A}_{l-1}^{j}$ is the estimate of the velocity of the track j at the time $t_{l-1}$ and $\hat{B}_{l-1}^{j}$ the estimate of the position vector of the track j at the time t=0,

$\hat{r}_{l-1}^{k} = \hat{q}_{l-1}^{"k}/c$ where $\hat{q}_{l-1}^{"k}$ is the estimate of the proportion of the plots $X_n$ classified in a track far removed from the track k and c the integral of the domain of the admissible measurements

‖.‖ represents the norm defined for a vector $X=(x_p)$ by $\left\|X\right\| = \sup\left(\dfrac{|x_p|}{\sigma_p}\right)$, where $\sigma_p$ is the standard deviation for the $p^{th}$ component of X in the density g(X),
S is a preset threshold,

and a publication module (35) configured to transmit to the exterior data from the table of the tracks (33).

9. The device according to the preceding claim, wherein the group of at least one sensor (31) is chosen from passive sensors, radar sensors, sonar sensors, optronic sensors or any combination of these sensors.

Mesure

10

12      15      12

11

11

Zone d'ambiguïté et passage
en mémoire du pistage

10

Temps

## FIG.1

| Détection des états d'ambiguïté des pistes | Etp 1 |

| Traitement spécifique aux pistes en état d'ambiguïté | Etp 2 |

| Publication d'état d'ambiguïté des pistes | Etp 3 |

## FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6081764 A

**Littérature non-brevet citée dans la description**

- **YAAKOV BAR-SHALOM ; XIAO-RONG LI.** Estimation and Tracking. *Artech House,* 1993
- **SAMUEL BLACKMAN ; ROBERT POPOLI.** Design and Analysis of Modern Tracking Systems. *Artech House,* 1999
- **YAAKOV BAR-SHALOM ; XIAO-RONG LI.** *Multi-target-multisensor tracking: Principles and techniques,* 1995
- **SAMUEL BLACKMAN.** Multiple Hypothesis Tracking For Multiple Target Tracking. *IEEE A&E Systems Magazine,* Janvier 2004, vol. 19 (1), 5-18
- **D. B. REID.** An algorithm for tracking multiple targets. *IEEE Transactions on Automatic Control,* Février 1976, vol. 21 (1), 101-104